# EUROPEAN PATENT SPECIFICATION

(11) **EP 1 493 371 B1**
(45) Date of publication and mention of the grant of the patent: **12.04.2006**
(21) Application number: 04250441.5
(22) Date of filing: 28.01.2004
(51) Int. Cl.: A47J 43/00, A21B 7/00

(54) **Bread maker and method of controlling the same**
Brotbackmaschine und zugehöriges Steuerverfahren
Machine de fabrication de pain et procédé de commande associé

(30) Priority: 07.05.2003 KR 2003029065
(43) Date of publication of application: 05.01.2005
(73) Proprietor: SAMSUNG ELECTRONICS CO., LTD., Suwon-si, Gyeonggi-do (KR)
(72) Inventor: Sung, Han-jun, Suwon-city Kyungki-do (KR); Kwon, Yong-hyun, Suwon-city Kyungki-do (KR); Kim, Chul, Anyang city Kyungki-do (KR); Lee, Tae-uk, Suwon-city Kyungki-do (KR); Park, Jae-ryong, Paldal-ku Suwon-city Kyungki-do (KR); Lee, Jang-woo, Suwon-city Kyungki-do (KR); Lim, Dong-bin, Suwon-city Kyungki-do (KR)
(74) Representative: Brandon, Paul Laurence

(56) References cited:
- WO-A-92/10100
- US-A- 4 590 850
- US-A- 4 803 086
- US-A- 5 947 009

## Description

The present invention relates to bread makers and to methods of controlling the same, and more particularly, but not exclusively, to bread makers methods of controlling the same, which prevent a breakaway of a mixing bag from kneading drums inside the bread maker by controlling the kneading drums so that the kneading drums rotate slowly at a predetermined position before approaching turning positions of the kneading drums by decreasing rotation torque of the kneading drums based upon a sensed rotated position.

Generally, a bread maker automatically performs kneading, leavening, and baking of bread dough, and provides fresh bread to a user, so that a user only needs to put ingredients in the bread maker. For example, a bread maker disclosed in Korean Patent First Publication No. 1988-7000638 includes a pair of parallel kneading drums at upper and lower parts of an oven compartment that reverse rotary direction periodically, a baking tray between the pair of kneading drums, a heater heating the inside of the oven compartment, a bar code reader, etc.

In the bread maker, upper and lower ends of a mixing bag filled with flour, water, etc., are attached to the upper and lower kneading drums, and then the mixing bag is reciprocated up and down over a predetermined period of time, thereby kneading the dough in the mixing bag.

After completing the kneading of the dough, the mixing bag is automatically separated from the upper kneading drum, and wound on the lower kneading drum, with the dough being squeezed out of the mixing bag and into the baking tray. Thereafter, the heater heats the inside of the oven compartment, thereby leavening and baking the dough during a predetermined period of time.

However, there is a problem in that during the bread making process, one or both of the upper and lower kneading drums may be rotated too far such that the mixing bag is wound beyond a safe distance. This presents a risk that the mixing bag will break and either not produce optimum quality bread or possibly spill the contents of the mixing bag. Such an incident would result in the need to thoroughly clean the interior of the bread maker and requires a significant amount of labor and potential for injury.

WO 92/10100 discloses an automatic baking apparatus for making food products in piece form from dough-like substances. The baking apparatus has upper and lower drums and means for moving the drums which enables the contents of a mixbag fixed at holding means on the upper and lower drums to be kneaded.

It is an aim of preferred embodiments of the present invention to provide a bread maker and a method of controlling the same, which prevents a breakaway of a mixing bag from kneading drums inside the bread maker by controlling the kneading drum to rotate slowly at a predetermined position before approaching a turning position of the kneading drum by decreasing rotation torque of the kneading drum based upon a sensed rotated position.

According to the present invention in a first aspect, there is provided a bread maker having a main body having an oven compartment, a pair of parallel kneading drums spaced apart from each other inside the oven compartment and winding a mixing bag filled with ingredients to make bread thereon, and a drum driver driving the kneading drums to rotate, comprising: a rotation sensing part (40) sensing rotation of at least one of the kneading drums (12a, 12b); and characterised by comprising: a controller (72) controlling the drum driver (36) and thereby rotating the at least one kneading drum (12a, 12b) at a decreased rate of rotation, when the kneading drum is determined to be at a predetermined position, based on the rotated position sensed by the rotation sensing part, before approaching a turning position, by decreasing rotation torque of the at least one kneading drum.

According to the present invention in a second aspect, there is provided a method of a controlling a bread maker having a main body having an oven compartment, a pair of kneading drums spaced apart from each other inside the oven compartment and winding a mixing bag filled with ingredients to make bread thereon, and a drum driver driving the kneading drums to rotate, the method characterised by: sensing rotation of at least one of the kneading drums; and controlling the drum driver and thereby rotating the at least one kneading drum at a decreased rate of rotation, when the kneading drum is determined to be a predetermined position, based on the rotated position sensed by the rotation sensing part, before approaching a turning position, by decreasing rotation torque of the at least one kneading drum.

Further features of the present invention are set out in the appended claims.

The present invention will become apparent and more readily appreciated from the following description of the embodiments, by way of example only, taken in conjunction with the accompany drawings of which:
FIG. 1 is a perspective view of a bread maker according to an embodiment of the present invention;
FIG. 2 is a cut open perspective view of a component compartment of FIG. 1;
FIG. 3 is a control block diagram of the bread maker according to an embodiment of the present invention; and
FIG. 4 is a control flowchart of the bread maker according to an embodiment of the present invention.

Reference will now be made in detail to the embodiments of the present invention, examples of which are illustrated in the accompanying drawings, wherein like reference numerals refer to like elements throughout. The embodiments are described below in order to explain the present invention by referring to the figures.

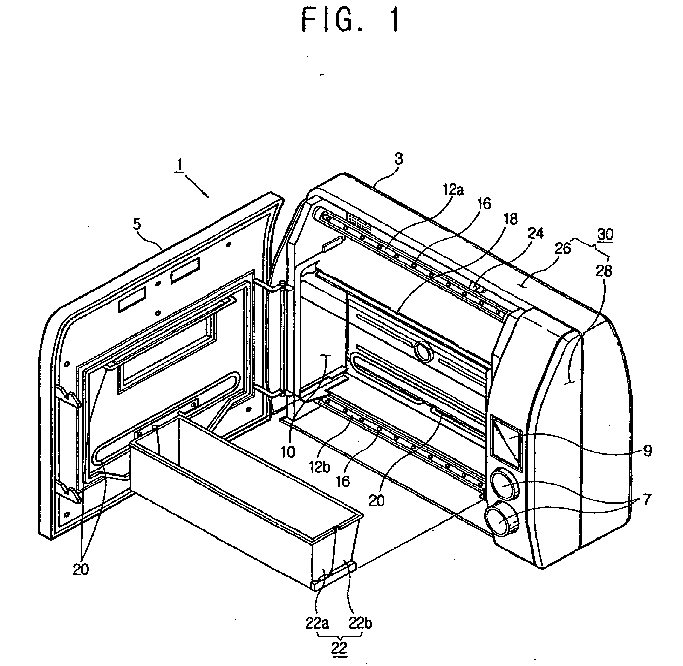

As shown in FIG. 1, a bread maker 1 according to an embodiment of the present invention comprises a main body 3 having an oven compartment 10 and a component compartment 30, a door 5 provided in the front of the main body 1 to open and close a front opening of the oven compartment 10, an operation selecting part 7 provided in a front side of the main body 3 and allowing a user to select an operation of the bread maker 1, and a display part 9 displaying an operating state of the bread maker 1.

In upper and lower parts of the oven compartment 10 are provided an upper kneading drum 12a and a lower kneading drum 12b, which are disposed in parallel and alternate clockwise and counterclockwise rotations. On the upper and lower kneading drums 12a and 12b are wound opposite ends of a mixing bag (not shown) filled with ingredients to make the bread, respectively. Each kneading drum 12a and 12b has a plurality of holding projections 16 protruding along a lengthwise direction thereof to hold the opposite ends of a mixing bag, so that the mixing bag can be attached to the kneading drums 12a and 12b.

In a lower part of the oven compartment 10, there is a baking tray 22 in which the kneaded dough is baked between the upper and lower kneading drums 12a and 12b. The baking tray 22 includes a first tray 22a and a second tray 22b, each having an "L"-shaped section symmetrical to one another that combine into a box shape having an open top.

In an upper part of the oven compartment 10, a pair of dough-blocking members 18 is provided between the upper kneading drum 12a and the baking tray 12b to knead the dough contained in the mixing bag within the baking tray 22, preventing the dough from moving outside the baking tray 22.

At upper and lower parts of the inside walls of the oven compartment 10 and the door 5 are provided heaters 20 to heat the inside of the oven compartment 10.

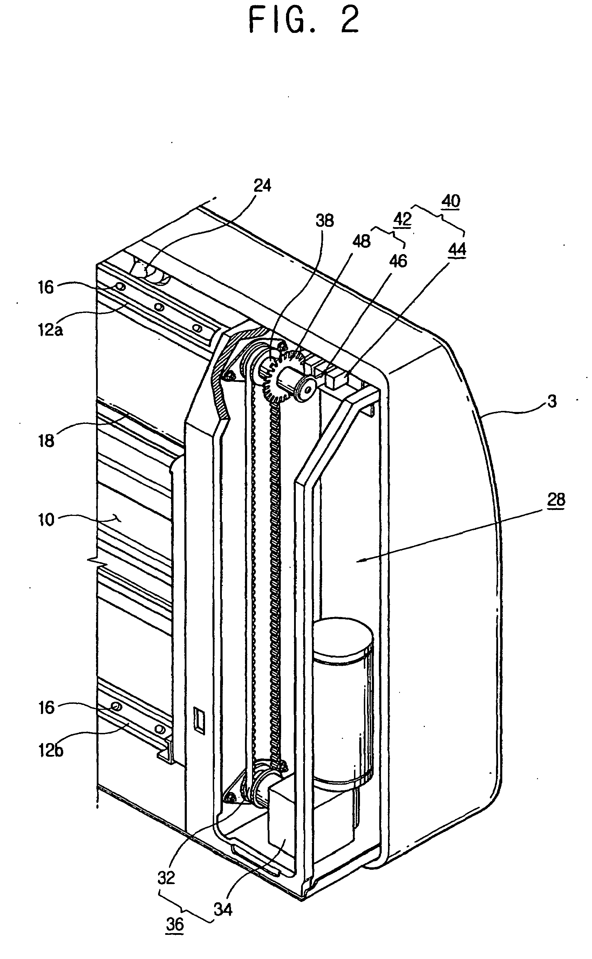

The component compartment 30 includes a first component compartment 28 placed beside the oven compartment 10 and a second component compartment 26 placed behind the oven compartment 10. As shown in FIG. 2, inside the first component compartment 28 is provided a drum driver 36 that rotates the upper and lower kneading drums 12a and 12b in clockwise and counterclockwise directions. Inside the second component compartment 26 is provided a bar code reader 24 that reads a bar code printed on or applied to the mixing bag that is wound on the upper and lower kneading drums 12a and 12b.

The drum driver 36 includes a motor 34 that rotates the lower kneading drum 12b, and a belt 32 that transmits a rotary movement of the lower kneading drum 13 to a rotation shaft 38 of the upper kneading drum 12a. The bar code reader 24 may move near to, and distantly from, an outer circumference of the upper kneading drum 12b.

On the other hand, the bread maker 1, according to an embodiment of the present invention, comprises a rotation sensing part 40 to sense rotation of at least one of the upper and lower kneading drums 12a and 12b.

The rotation sensing part 40 includes a disk part 42 attached to the rotation shaft 38 of the upper kneading drum 12a, and a rotation sensor 44 placed near the disk part 42 that outputs a pulse signal by sensing the rotation of the disk part 42.

The disk part 42 includes a first disk 46 that allows the rotation sensor 44 to sense one revolution of the upper kneading drum 12a, and a second disk 48 that allows the rotation sensor 44 to sense a rotation of the upper kneading drum 12a that is less than one complete turn.

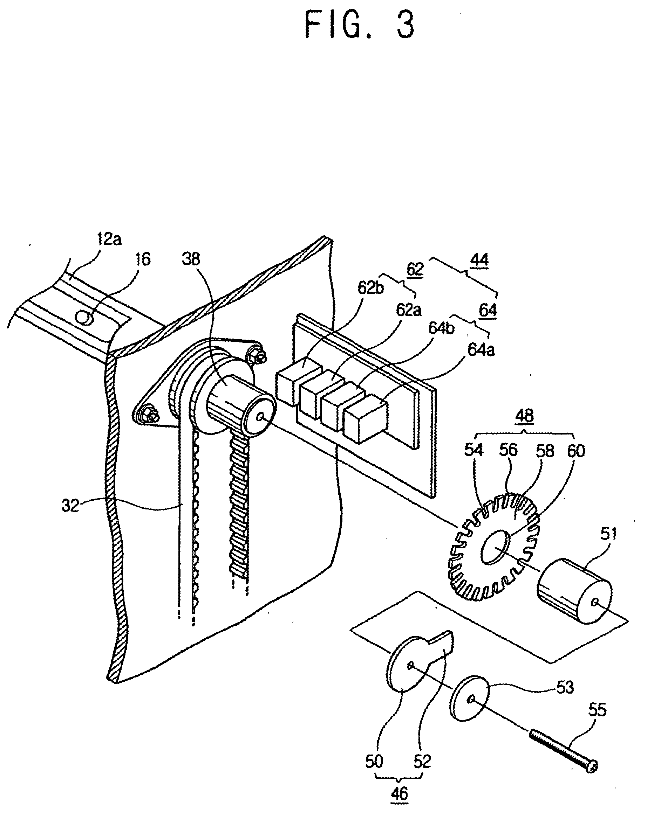

Hereinbelow, these components of the rotation sensing part 40 will be described in more detail with reference to FIG. 3.

The first disk 46 is a circular plate 50, which is separated from the second disk 48 by a cylindrical part 51 and connected to the rotation shaft 38 of the upper kneading drum 12a using a washer 53 and a bolt 55. The circular plate 50 is formed with a single projection 52 radially extended therefrom. Hence, the first disk 46 rotates with the upper kneading drum 12a and allows the rotation sensor 44 to sense one revolution of the upper kneading drum 12a.

The second disk 48 is a circular plate 58 with a shaft combining hole 60 used to attach the circular plate 58 to the rotation shaft 38 of the upper kneading drum 12a. The circular plate 58 has a plurality of slots 54 along the circumference thereof at regular intervals, forming a plurality of projections 56. For example, in the embodiment shown in FIG. 3, the second disk 48 has twenty-four slots 54, forming twenty-four projections 56. Hence, the second disk 48 rotates with the upper kneading drum 12a and allows the rotation sensor 44 to sense a rotation of the upper kneading drum 12a that is less than one revolution.

The rotation sensor 44 includes a first disk sensor 64 sensing the single projection 52 of the first disk 46 and outputting one pulse signal per revolution of the upper kneading drum 12a, and a second disk sensor 62 sensing the twenty-four projections 56 of the second disk 48 and outputting twenty-four pulse signals per revolution of the upper kneading drum 12a. That is, while the upper kneading drum 12a makes one revolution, the first and second disk sensors 46 and 48 output one and twenty-four pulse signals, respectively.

The first and second disk sensors 64 and 62 are each used as a pulse generator, and include light emitting parts 64a and 62a that emit a sensing signal such as infrared rays toward the first and second disks 46 and 48, and light receiving parts 64b and 62b that face the light emitting parts 64a and 62a, respectively, across the first and second disks 46 and 48 and receive the light emitted from the light emitting parts 64a and 62a, respectively.

The first disk sensor 64 senses when the single projection 52 of the first disk 46 interrupts the light emitted from the light emitting part 64a to the light receiving part 64b, thereby outputting one pulse signal per one complete turn of the upper kneading drum 12a.

It is understood that the rotation sensing part 40 may also comprise a single rotation disc as a circular shaped member and having convex sections and concave sections in the circumference, and a rotation signal sensor having a radiating part and a signal sensing part provided in parallel with the rotation disc interposed therebetween.

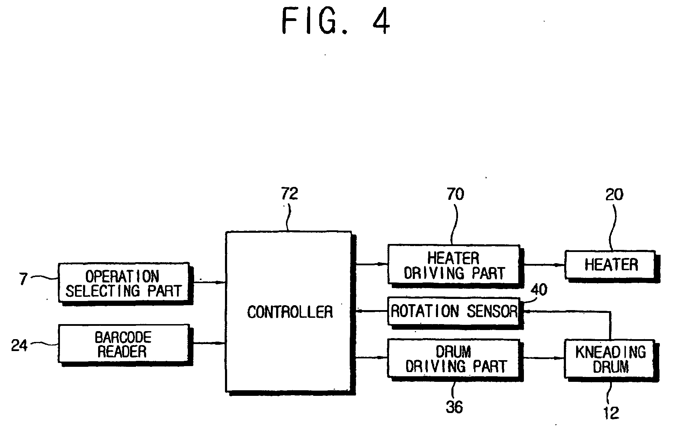

FIG. 4 is a control block diagram of the bread maker according to an embodiment of the present invention. As shown therein, when a user selects a bar code reading operation through the operation selecting part 7, a controller 72 of the bread maker 1 controls the drum driver 36 to turn on the motor 34 to partially wind the mixing bag attached to the kneading drums 12a or 12b on the kneading drum 12a or 12b. As the mixing bag is wound on the kneading drum 12a or 12b, the bar code reader 24 reads the bar code printed or applied on the mixing bag.

On the basis of the bar code, including information on kneading time, leavening time, leavening temperature, baking time, baking temperature, etc., of a particular recipe, which is read by the bar code reader 24, the controller 72 controls the drum driver 36 to rotate the kneading drums 12 so as to knead the dough contained in the mixing bag, and controls a heater driving part 70 to turn on the heaters 20 so as to leaven and bake the dough.

The rotation sensor 44 transmits the pulse signals output from the first and second disk sensors 62 and 62 to the controller 72, and then the controller 72 determines a rotated position of the upper kneading drum 12a based upon the output pulse signals, and controls the motor 34 of the drum driver 36 to reverse a rotating direction of the upper and lower kneading drums 12a and 12b, thereby adjusting a reciprocating distance of the mixing bag.

Here, the controller 72 controls an on/off cycle of a switching element (not shown) provided in the drum driver 36 so as to lower a PWM (pulse width modulation) duty of the motor 34 when the kneading drum 12 is in a predetermined position before approaching a turning position, thereby decreasing rotation torque of the kneading drum 12. Thus, the kneading drums 12 are slowly rotated toward the turning position by the decreased rotation torque and a load of the ingredients contained in the mixing bag. When the kneading drums 12 are in the turning position, the rotating direction of the motor 34 is reversed, thereby reciprocating the mixing bag up and down.

However, in the case where the load of the ingredients contained in the mixing bag is relatively slight, the kneading drum 12 may excessively rotate more than the turning position. At this time, the controller 72 determines whether the kneading drum 12 is excessively rotated or not on the basis of the rotated position sensed by the rotation sensing part 40. Further, when the kneading drum 12 is in a predetermined position before approaching a mixing bag breakaway position, the controller 72 controls two terminals of the motor 34 to be shorted, thereby braking the motor 34. Thus, the kneading drums 12 are prevented from rotating over the mixing bag breakaway position due to the excessive rotation, thereby preventing the mixing bag from separating from the kneading drums 12.

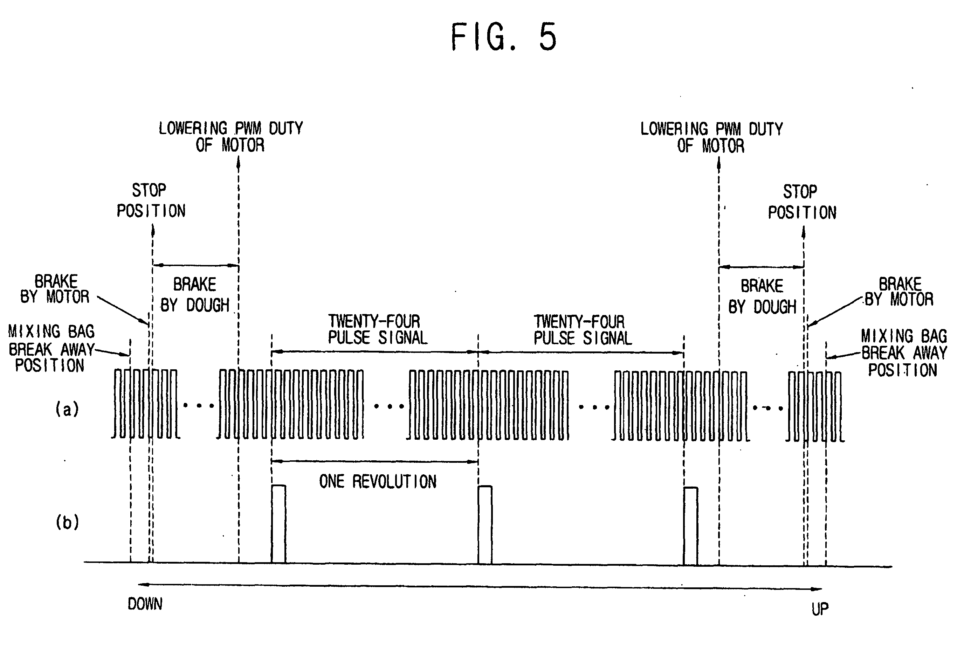

FIG. 5 illustrates the pulse signals output from the first and second disk sensors 64 and 62. As shown therein, while the upper kneading drum 12a rotates, the first and second disk sensors 64 and 62 output pulse signals by sensing the rotation of the first and second disks 46 and 48, respectively. Because the first and second disks 46 and 48 are formed with the single and twenty-four projections 52 and 56, respectively, the first disk sensor 64 outputs one pulse signal (sequence "b") while the second disk sensor 62 outputs twenty-four pulse signals (sequence "a").

The kneading operation is performed by rotating the kneading drums 12 to wind the mixing bag on the kneading drums 12 alternately. At this time, the controller 72 controls the PWM duty of the motor 34 of the drum driver 36 to be lowered at the pulse signal which precedes the pulse signal of the clockwise turning position or the counterclockwise turning position of the kneading drums 12 by a predetermined number, thereby stopping the kneading drums 12 at the turning position by the decreased rotation torque and the load of the ingredients contained in the mixing bag. Nevertheless, if the kneading drums 12 are not stopped at the turning position and are rotated over the turning point, the motor 34 is braked at the pulse signal which precedes the pulse signal of the mixing bag breakaway position of the kneading drums 12 by a predetermined number.

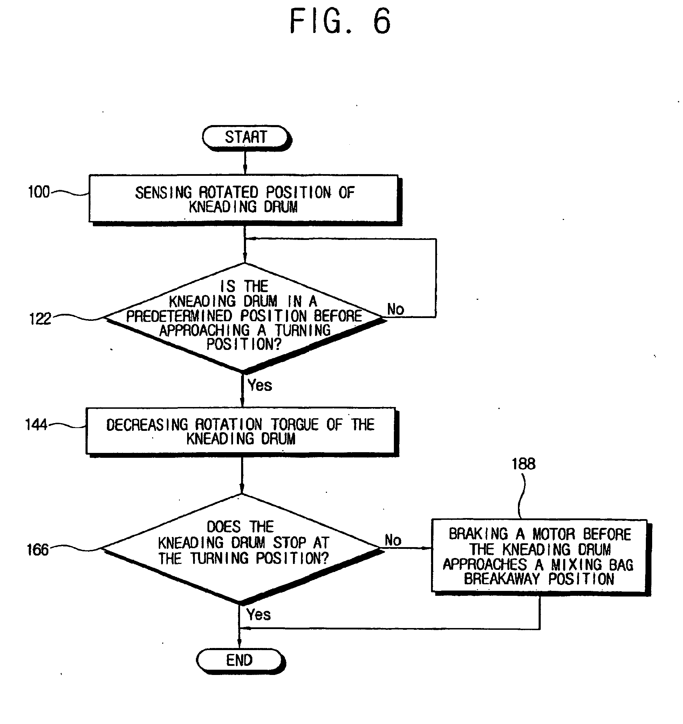

With this configuration, operation of the bread maker 1 will be described with reference to FIG. 6. At operation 100, while the kneading drum 12 rotates, the rotation sensing part 40 senses the rotated position of the kneading drum 12. At operation 122, the controller 72 determines whether or not the kneading drum 12 is in a predetermined position before approaching the turning position based upon the output pulse signals. At operation 144, when the kneading drum 12 is in the position before approaching the turning position, the PWM duty of the motor 34 of the drum driver 36 is lowered, thereby decreasing the rotation torque of the kneading drum 12. At operation 166, the controller 72 determines whether or not the kneading drums 12 stop at the turning position by the decreased rotation torque and the load of the ingredients contained in the mixing bag. At operation 188, when the kneading drums 12 are not stopped at the turning position and are rotated over the turning position, two terminals of the motor 34 are shorted before approaching the mixing bag breakaway position, thereby braking the motor 34.

As described above, the kneading drums are slowly rotated at a predetermined position before approaching the turning position by lowering the PWM duty of the motor. Further, the kneading drums stop at the turning position by the decreased rotation torque and the load of the ingredients contained in the mixing bag, thereby preventing the mixing bag from separating from the kneading drum due to the excessive rotation of the kneading drums.

As described above, preferred embodiment of the present invention provide a bread maker and a method of controlling the same, which prevent a mixing bag from separating from a kneading drum due to excessive rotation of the kneading drums.

Although a few embodiments of the present invention have been shown and described, it would be appreciated by those skilled in the art that changes may be made in this embodiment without departing from the principles of the invention, the scope of which is defined in the claims and their equivalents.

## Claims

1. A bread maker (1) having a main body (3) having an oven compartment (30), a pair of parallel kneading drums (12a, 12b) spaced apart from each other inside the oven compartment (30) and winding a mixing bag filled with ingredients to make bread thereon, and a drum driver (36) driving the kneading drums (12a, 12b) to rotate, **characterised by** comprising:
a rotation sensing part (40) sensing rotation of at least one of the kneading drums (12a, 12b); and
a controller (72) suitable to control the drum driver (36) and thereby rotate the at least one kneading drum (12a, 12b) at a decreased rate of rotation, when the kneading drum (12a, 12b) is determined to be at a predetermined position, based on the rotated position sensed by the rotation sensing part (40), before approaching a turning position, by decreasing rotation torque of at least one kneading drum (12a, 12b).

2. The bread maker (1) according to claim 1, wherein the kneading drums (12a, 12b) of the oven compartment (30) is plural in number and located in upper and lower portions of the oven compartment(30), respectively.

3. The bread maker (1) according to claim 2, wherein the upper and lower kneading drums (12a, 12b) are spaced apart form each other and are provided in parallel.

4. The bread maker (1) according to claim 3, further comprising a baking tray (22) in which kneaded dough is baked, wherein the baking tray (22) comprises a first tray (22a) and a second tray (22b), each tray having an L-shaped symmetrical section facing the other thereby forming a box with an open top.

5. The bread maker (1) according to claim 4, further comprising a pair of dough blocking members (18) between the upper kneading drum (12a) and the baking tray (22) to prevent ingredients from moving outside the baking tray (22).

6. The bread maker (1) according to any one of claims 1-5, further comprising heaters (20) to heat the ingredients in the mixing bag.

7. The bread maker (1) according to any one of claims 1-6, further comprising first (28) and second (26) component compartments, wherein the drum driver (36) is located in the first compartment (28) and a bar code scanner (24) is located in the second compartment (26).

8. The bread maker (1) according to claim 7, wherein the bar code scanner (24) reads a bar code on the mixing bag.

9. The bread maker according to any one of claims 1-8, wherein the rotation sensing part (40) comprises:
a disk part (42) rotating in accordance with a rotation of the kneading drum (12a, 12b); and
a rotation sensor (44) outputting a signal by sensing the rotation of the disk part (42).

10. The bread maker (1) according to claim 9, wherein the disk part (42) comprises:
a first disk (46) sensing one rotation of the kneading drum (12a, 12b); and
a second disk (48) sensing less than one rotation of the kneading drum (12a, 12b).

11. The bread maker (1) according to claim 10, wherein the first disk (46) is a circular plate (50) formed with a projection (52) radially extended therefrom to a rotation sensor sensing area.

12. The bread maker (1) according to claim 10 or claim 11, wherein the second disk (48) is a circular plate (58) having a plurality of slots (54) extending therefrom to the rotation sensor sensing area along the circumference thereof at regular intervals.

13. The bread maker (1) according to any one of claims10-12, wherein the rotation sensor (44) comprises:
a first disk sensor (64) sensing the first disk (46); and
a second disk sensor (62) sensing the second disk (48).

14. The bread maker (1) according to claim 13, wherein the first disk sensor (64) and the second disk sensor (62) comprise:
light emitting parts (64a, 62a) emitting a sensing signal, which penetrates the first and second disks (46, 48), respectively; and
light receiving parts (64b, 62b) facing the light emitting parts (64a, 62a) across the first and second disks (46, 48), respectively, and receiving the light emitting from the light emitting parts (64a, 62a).

15. The bread maker (1) according to claim 1, wherein when the controller (72) determines that the kneading drum (12a, 12b) is rotated over the turning position based on the rotated position sensed by the rotation sensing part (40), the controller (72) is suitable to control the drum driver (36) to drive the kneading drum (12a, 12b) to stop at a predetermined position before approaching a mixing bag breakaway position, at which the mixing bag is separated from the kneading drum (12a, 12b).

16. A method of controlling a bread maker (1) having a main body (3) having an oven compartment (30), a pair of kneading drums (12a, 12b) spaced apart from each other inside the oven compartment (30) and winding a mixing bag filled with ingredients to make bread thereon, and a drum driver (36) driving the kneading drums (12a, 12b) to rotate, the method **characterised by**:
sensing rotation of at least one of the kneading drums (12a, 12b); and
controlling the drum driver (36) and thereby rotating the at least one kneading drum (12a, 12b) at a decreased rate of rotation, when the kneading drum (12a 12b) is determined to be a predetermined position, based on the rotated position sensed by the rotation sensing part (40), before approaching a turning position, by decreasing rotation torque of the at least one kneading drum (12a, 12b).

17. The method according to claim 16, further comprising winding the mixing bag onto the kneading drum (12a, 12b).

18. The method according to claim 17, wherein the winding comprises reading a bar code on the mixing bag to determine the bread making process to be carried out.

19. The method according to claim 18, further comprising controlling the kneading drum (12a, 12b) and the heater (20) to knead and heat the ingredients in the mixing bag.

20. The method according to any one of claims16-19, wherein the initial determining operation comprises transmitted pulse signals from a rotation sensor (44) to a controller (72).

21. The method according to claim 20, further comprising reversing a rotating direction of the kneading drum (12a, 12b) based upon the transmitted pulse signals.

22. The method according to claim 21, further comprising controlling an on/off switching element to lower a pulse width modulation (PWM) duty of a motor (34) when the kneading drum (12a, 12b) is in the predetermined position before approaching a turning position.

23. The method according to claim 16, further comprising controlling the drum driver (36) to drive the kneading drum (12a, 12b) to stop at a predetermined position before approaching a mixing bag breakaway position, at which the mixing bag is separated from the kneading drum (12a, 12b), when the kneading drum (12a, 12b) is determined to be rotated over the turning position based on the rotated position sensed by the rotation sensing part (40).

24. The method of claim 16, further comprising braking the motor (34) before at least one of the kneading drums (12a, 12b) approaches a mixing bag breakaway position, if the kneading drum (12a, 12b) are not stopped at the turning position.

## Revendications

1. Machine à faire du pain (1) comprenant un corps principal (3) possédant un compartiment four (30), deux tambours de malaxage parallèles (12a, 12b) espacés l'un de l'autre à l'intérieur du compartiment four (30) et enroulant sur eux un sac de mélange rempli d'ingrédients pour faire du pain, et un entraîneur de tambours (36) entraînant les tambours de malaxage (12a, 12b) en rotation, **caractérisée en ce qu'**elle comprend :
- une partie de détection de rotation (40) détectant la rotation d'au moins un des tambours de malaxage (12a, 12b) ; et
- une unité de commande (72) permettant de commander l'entraîneur de tambours (36) et de faire ainsi tourner ledit et au moins un tambour de malaxage (12a, 12b) à une vitesse de rotation réduite lorsque l'on estime que le tambour de malaxage (12a, 12b) se trouve en une position prédéterminée en fonction de la position de rotation effectuée détectée par la partie de détection de rotation (40), avant que l'on approche d'une position de rotation, en diminuant le couple de rotation d'au moins un tambour de malaxage (12a, 12b).

2. Machine à faire du pain (1) selon la revendication 1, dans laquelle les tambours de malaxage (12a, 12b) du compartiment four (30) sont au nombre de plusieurs et sont situés dans les parties supérieure et inférieure du compartiment four (30), respectivement.

3. Machine à faire du pain (1) selon la revendication 2, dans laquelle les tambours de malaxage supérieur et inférieur (12a, 12b) sont espacés l'un de l'autre et sont parallèles.

4. Machine à faire du pain (1) selon la revendication 3, comprenant en outre un plateau de cuisson (22) dans lequel la pâte malaxée est cuite, lequel plateau de cuisson (22) comprend un premier plateau (22a) et un second plateau (22b), chaque plateau possédant une section symétrique en forme de L faisant face à l'aut=e, formant ainsi une boîte avec un dessus ouvert.

5. Machine à faire du pain (1) selon la revendication 4, comprenant en outre deux éléments de blocage de pâte (18) entre le tambour de malaxage supérieur (12a) et le plateau de cuisson (22) afin d'empêcher les ingrédients de se déplacer hors du plateau de cuisson (22).

6. Machine à faire du pain (1) selon l'une quelconque des revendications 1 à 5, comprenant en outre des unités de chauffage (20) qui vont chauffer les ingrédients dans le sac de mélange.

7. Machine à faire du pain (1) selon l'une quelconque des revendications 1 à 6, comprenant en outre un premier compartiment (28) et un second compartiment (26) pour composants, et dans laquelle l'entraîneur de tambours (36) se situe dans le premier compartiment (28) et un lecteur de code à barres (24) se situe dans le second compartiment (26).

8. Machine à faire du pain (1) selon la revendication 7, dans laquelle le lecteur de code à barres (24) lit un code à barres sur le sac de mélange.

9. Machine à faire du pain (1) selon l'une quelconque des revendications 1 à 8, dans laquelle la partie de détection de rotation (40) comprend :
- une partie disque (42) tournant en fonction de la rotation du tambour de malaxage (12a, 12b) ; et
- un capteur de rotation (44) émettant un signal en détectant la rotation de la partie disque (42).

10. Machine à faire du pain (1) selon la revendication 9, dans laquelle la partie disque (42) comprend :
- un premier disque (46) détectant une rotation du tambour de malaxage (12a, 12b) ; et
- un second disque (48) détectant moins d'une rotation du tambour de malaxage (12a, 12b).

11. Machine à faire du pain (1) selon la revendication 10, dans laquelle le premier disque (46) consiste en une plaque circulaire (50) comportant une protubérance (52) dépassant radialement de celle-ci jusqu'à une zone de détection du capteur de rotation.

12. Machine à faire du pain (1) selon la revendication 10 ou la revendication 11, dans laquelle le second disque (48) consiste en une plaque circulaire (58) comportant plusieurs fentes (54) qui s'étendent de celle-ci jusqu'à la zone de détection du capteur de rotation le long de la circonférence de cette dernière et à des intervalles réguliers.

13. Machine à faire du pain (1) selon l'une quelconque des revendications 10 à 12, dans laquelle le capteur de rotation (44) comprend :
- un premier capteur de disque (64) détectant le premier disque (46) ; et
- un second capteur de disque (62) détectant le second disque (48).

14. Machine à faire du pain (1) selon la revendication 13, dans laquelle le premier capteur de disque (64) et le second capteur de disque (62) comprennent :
- des parties émettrices de lumière (64a, 62a) émettant un signal de détection qui pénètre les premier et second disques (46, 48), respectivement ; et
- des parties réceptrices de lumière (64b, 62b) faisant face aux parties émettrices de lumière (64a, 62a) de l'autre côté des premier et second disques (46, 48), respectivement, et recevant la lumière émise par les parties émettrices de lumière (64a, 62a).

15. Machine à faire du pain (1) selon la revendication 1, dans laquelle, lorsque l'unité de commande (72) estime que le tambour de malaxage (12a, 12b) a tourné et dépassé une position de rotation, en fonction de la position de rotation effectuée détectée par la partie de détection de rotation (40), l'unité de commande (72) va ordonner à l'entraîneur de tambours (36) d'entraîner le tambour de malaxage (12a, 12b) et de s'arrêter en une position prédéterminée avant que l'on approche d'une position de rupture du sac de mélange, le sac de mélange étant alors séparé du tambour de malaxage (12a, 12b).

16. Procédé de commande d'une machine à faire du pain (1) comprenant un corps principal (3) possédant un compartiment four (30), deux tambours de malaxage (12a, 12b) espacés l'un de l'autre à l'intérieur du compartiment four (30) et enroulant sur eux un sac de mélange rempli d'ingrédients pour faire du pain, et un entraîneur de tambours (36) entraînant les tambours de malaxage (12a, 12b) en rotation, lequel procédé est **caractérisé par** les étapes suivantes :
- détecter la rotation d'au moins un des tambours de malaxage (12a, 12b) ; et
- commander l'entraîneur de tambours (36) et faire ainsi tourner ledit et au moins un tambour de malaxage (12a, 12b) à une vitesse de rotation réduite lorsque l'on estime que le tambour de malaxage (12a, 12b) se trouve en une position prédéterminée, en fonction de la position de rotation effectuée détectée par la partie de détection de rotation (40), avant que l'on approche d'une position de rotation, en diminuant le couple de rotation dudit et au moins un tambour de malaxage (12a, 12b).

17. Procédé selon la revendication 16, consistant en outre à enrouler le sac de mélange sur le tambour de malaxage (12a, 12b).

18. Procédé selon la revendication 17, dans lequel l'enroulement comprend la lecture d'un code à barres sur le sac de mélange afin de déterminer le processus de fabrication de pain devant être effectué.

19. Procédé selon la revendication 18, consistant en outre à commander le tambour de malaxage (12a, 12b) et l'unité de commande (20) afin de malaxer et de chauffer les ingrédients dans la sac de mélange.

20. Procédé selon l'une quelconque des revendications 16 à 19, dans lequel l'opération de détermination initiale consiste à émettre des signaux de type impulsions depuis un capteur de rotation (44) jusqu'à l'unité de commande (72).

21. Procédé selon la revendication 20, consistant en outre à inverser le sens de rotation du tambour de malaxage (12a, 12b) en fonction des signaux de type impulsions émis.

22. Procédé selon la revendication 21, consistant en outre à commander un élément de commutation marche/arrêt afin de réduire la capacité de modulation de largeur d'impulsion (PWM) d'un moteur (34) lorsque le tambour de malaxage (12a, 12b) est dans la position prédéterminée avant que l'on approche d'une position de rotation.

23. Procédé selon la revendication 16, consistant en outre à ordonner à l'entraîneur de tambours (36) d'entrainer le tambour de malaxage (12a, 12b) et de s'arrêter en une position prédéterminée avant que l'on approche d'une position de rupture du sac de mélange, le sac de mélange étant alors séparé du tambour de malaxage (12a, 12b), lorsque l'on estime que le tambour de malaxage (12a, 12b) a tourné et dépassé une position de rotation en fonction de la position de rotation effectuée détectée par la partie de détection de rotation (40).

24. Procédé selon la revendication 16, consistant en outre à freiner le moteur (34) avant que l'un au moins des tambours de malaxage (12a, 12b) n'approche d'une position de rupture du sac de mélange si le tambour de malaxage (12a, 12b) ne s'est pas arrêté à la position de rotation.

## Patentansprüche

1. Brotbackmaschine (1), die einen Hauptkörper (3) mit einer Ofenkammer (30), ein Paar paralleler Knetwalzen (12a, 12b), die voneinander im Inneren der Ofenkammer (30) beabstandet sind und auf die ein Mischbeutel aufgewickelt ist, der mit Zutaten zum Bereiten von Brot gefüllt ist, und eine Walzen-Antriebseinrichtung (36) aufweist, die die Knetwalzen (12a, 12b) antreibt, so dass sie sich drehen, **dadurch gekennzeichnet, dass** sie umfasst:
einen Drehungserfassungsteil (40), der Drehung wenigstens einer der Knetwalzen (12a, 12b) erfasst; und
eine Steuerung (72), die sich dazu eignet, die Walzen-Antriebseinrichtung (36) zu steuern und die wenigstens eine Knetwalze (12a, 12b) mit einer verringerten Drehgeschwindigkeit zu drehen, wenn auf Basis der durch den Drehungserfassungsteil (40) erfassten Drehposition festgestellt wird, dass sich die Knetwalze (12a, 12b) an einer vorgegebenen Position befindet, bevor sie sich einer Wendeposition nähert, indem das Drehmoment wenigstens einer der Knetwalzen (12a, 12b) verringert wird.

2. Brotbackmaschine (1) nach Anspruch 1, wobei mehrere der Knetwalzen (12a, 12b) der Ofenkammer (30) vorhanden sind und sich im oberen bzw. unteren Abschnitt der Ofenkammer (30) befinden.

3. Brotbackmaschine (1) nach Anspruch 2, wobei die oberen und die unteren Knetwalzen (12a, 12b) voneinander beabstandet und parallel zueinander vorhanden sind.

4. Brotbackmaschine (1) nach Anspruch 3, die des Weiteren ein Backfach (22) umfasst, in dem gekneteter Teig gebacken wird, wobei das Backfach (22) ein erstes Fach (22a) und ein zweites Fach (22b) umfasst und jedes Fach einen L-förmigen symmetrischen Abschnitt hat, der dem anderen zugewandt ist, so dass ein Kasten mit einer offenen Oberseite gebildet wird.

5. Brotbackmaschine (1) nach Anspruch 4, die des Weiteren ein Paar Teig-Sperrelement (18) zwischen der oberen Knetwalze (12a) und dem Backfach (22) umfasst, um zu verhindern, dass sich Zutaten aus dem Backfach (22) heraus bewegen.

6. Brotbackmaschine (1) nach einem der Ansprüche 1-5, die des Weiteren Heizeinrichtungen (20) zum Erhitzen der Zutaten in dem Mischbeutel umfasst.

7. Brotbackmaschine (1) nach einem der Ansprüche 1-6, die des Weiteren eine erste (28) und eine zweite (26) Bauteilkammer umfasst, wobei sich die Walzen-Antriebseinrichtung (36) in der ersten Kammer (28) befindet und sich ein Strichcode-Scanner (24) in der zweiten Kammer (26) befindet.

8. Brotbackmaschine (1) nach Anspruch 7, wobei der Strichcode-Scanner (24) einen Strichcode auf dem Mischbeutel liest.

9. Brotbackmaschine (1) nach einem der Ansprüche 1-8, wobei der Drehungserfassungsteil (40) umfasst:
einen Scheibenteil (42), der sich entsprechend einer Drehung der Knetwalze (12a, 12b) dreht; und
einen Drehungssensor (44), der ein Signal ausgibt, indem er die Drehung des Scheibenteils (42) erfasst.

10. Brotbackmaschine (1) nach Anspruch 9, wobei der Scheibenteil (42) umfasst:
eine erste Scheibe (46), die eine Drehung der Knetwalze (12a, 12b) erfasst; und
eine zweite Scheibe (48), die weniger als eine Drehung der Knetwalzen (12a, 12b) erfasst.

11. Brotbackmaschine (1) nach Anspruch 10, wobei die erste Scheibe (46) eine kreisförmige Platte (50) ist, die mit einem Vorsprung (52) versehen ist, der sich von ihr aus radial zu einem Drehungssensor-Erfassungsbereich erstreckt.

12. Brotbackmaschine (1) nach Anspruch 10 oder Anspruch 11, wobei die zweite Scheibe (48) eine kreisförmige Platte (58) mit einer Vielzahl von Schlitzen (54) ist, die sich von ihr aus entlang des Umfangs derselben in regelmäßigen Abständen zu dem Drehungssensor-Erfassungsbereich erstrecken.

13. Brotbackmaschine (1) nach einem der Ansprüche 10-12, wobei der Drehungssensor (44) umfasst:
einen ersten Scheibensensor (64), der die erste Scheibe (46) erfasst; und
einen zweiten Scheibensensor (62), der die zweite Scheibe (48) erfasst.

14. Brotbackmaschine (1) nach Anspruch 13, wobei der erste Scheibensensor (64) und der zweite Scheibensensor (62) umfassen:
lichtemittierende Teile (64a, 62a), die ein Erfassungssignal emittieren, das durch die erste bzw. die zweite Scheibe (46, 48) hindurch dringt; und
lichtempfangende Teile (64b, 62b), die den lichtemittierenden Teilen (64a, 62a) über die erste bzw. die zweite Scheibe (46, 48) zugewandt sind und das von den lichtemittierenden Teilen (64a, 62a) emittierte Licht empfangen.

15. Brotbackmaschine (1) nach Anspruch 1, wobei sich die Steuerung (72) dazu eignet, die Walzen-Antriebseinrichtung (36) so zu steuern, dass sie die Knetwalze (12a, 12b) so antreibt, dass sie an einer vorgegebenen Position vor Annäherung an eine Mischbeutel-Abreißposition anhält, an der der Mischbeutel von der Knetwalze (12a, 12b) getrennt wird, wenn die Steuerung (72) auf Basis der durch den Drehungserfassungsteil (40) erfassten Drehposition feststellt, dass die Knetwalze (12a, 12b) über die Wendeposition hinaus gedreht wird.

16. Verfahren zum Steuern einer Brotbackmaschine (1), die einen Hauptkörper (3) mit einer Ofenkammer (30), ein Paar Knetwalzen (12a, 12b), die voneinander im Inneren der Ofenkammer (30) beabstandet sind und auf die ein Mischbeutel aufgewickelt ist, der mit Zutaten zum Zubereiten von Brot gefüllt ist, und eine Walzen-Antriebseinrichtung (36) aufweist, die die Knetwalzen (12a, 12b) so antreibt, dass sie sich drehen, wobei das Verfahren **gekennzeichnet ist durch**:
Erfassen von Drehung wenigstens einer der Knetwalzen (12a, 12b); und
Steuern der Walzen-Antriebseinrichtung (36) und **dadurch** Drehen der wenigstens einen Knetwalze (12a, 12b) mit einer verringerten Drehgeschwindigkeit, wenn auf Basis der **durch** den Drehungserfassungsteil (40) erfassten Drehungsposition festgestellt wird, dass sich die Knetwalze (12a, 12b) an einer vorgegebenen Position befindet, bevor sie sich einer Wendeposition nähert, indem Drehmoment der wenigstens einen Knetwalze (12a, 12b) verringert wird.

17. Verfahren nach Anspruch 16, das des Weiteren das Aufwickeln des Mischbeutels auf die Knetwalze (12a, 12b) umfasst.

18. Verfahren nach Anspruch 17, wobei das Aufwickeln das Lesen eines Strichcodes auf dem Mischbeutel zum Feststellen des auszuführenden Brotbackverfahrens umfasst.

19. Verfahren nach Anspruch 18, das des Weiteren das Steuern der Knetwalze (12a, 12b) und der Heizeinrichtung (20) zum Kneten und Erwärmen der Zutaten in dem Mischbeutel umfasst.

20. Verfahren nach einem der Ansprüche 16-19, wobei der anfängliche Feststellvorgang von einem Drehsensor (44) zu einer Steuerung (72) gesendete Impulssignale umfasst.

21. Verfahren nach Anspruch 20, das des Weiteren das Umkehren einer Drehrichtung der Knetwalze (12a, 12b) auf Basis der gesendeten Impulssignale umfasst.

22. Verfahren nach Anspruch 21, das des Weiteren das Steuern eines An/Aus-Schaltelementes zum Absenken eines Impulsbreitenmodulations-Tastverhältnisses eines Motors (34) umfasst, wenn sich die Knetwalze (12a, 12b) an der vorgegebenen Position vor der Annäherung an eine Wendeposition befindet.

23. Verfahren nach Anspruch 16, das des Weiteren umfasst, dass die Walzen-Antriebseinrichtung (36) so gesteuert wird, dass sie die Knetwalze (12a, 12b) so antreibt, dass sie an einer vorgegebenen Position vor Annäherung an eine Mischbeutel-Abreißposition, an der der Mischbeutel von der Knetwalze (12a, 12b) getrennt wird, anhält, wenn auf Basis der durch den Drehungserfassungsteit (40) erfassten Drehposition festgestellt wird, dass die Knetwalze über die Wendeposition hinaus gedreht wird.

24. Verfahren nach Anspruch 16, das des Weiteren das Abbremsen des Motors (34) umfasst, bevor wenigstens eine der Knetwalzen (12a, 12b) sich einer Mischbeutel-Abreißposition nähert, wenn die Knetwalze (12a, 12b) nicht an der Wendeposition angehalten wird.
